(19) European Patent Office — Europäisches Patentamt — Office européen des brevets

(11) **EP 1 059 604 A2**

(12) **EUROPEAN PATENT APPLICATION**

(43) Date of publication:
**13.12.2000 Bulletin 2000/50**

(51) Int. Cl.$^7$: **G06K 11/08**, G06K 11/16

(21) Application number: **00304162.1**

(22) Date of filing: **17.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.06.1999 JP 16057399**

(71) Applicant: **Newcom Inc.**
**Kuki-shi, Saitama 346-0002 (JP)**

(72) Inventors:
• **Murakami, Azuma**
  **Kuki-shi, Saitama 346-0002 (JP)**
• **Fukuzaki, Yasuhiro**
  **Kuki-shi, Saitama 346-0002 (JP)**
• **Ogawa, Yasuji**
  **Kitakatsushika-gun, Saitama 349-1103 (JP)**

(74) Representative:
**Votier, Sidney David**
**CARPMAELS & RANSFORD**
**43, Bloomsbury Square**
**London WC1A 2RA (GB)**

(54) **Coordinate input device allowing input by finger, pen or the like**

(57) A position coordinate input device which allows input by an ordinary pen (51) or a finger (50) itself of an operator as a position pointing device is disclosed. The position coordinate input device includes: a position coordinate detecting device (1) which detects a coordinate of a pointed location pointed by the position pointing device placed on the input detecting surface (5a;31); a pressure detecting device (2) which is arranged in the input detection surface, and which detects a pressure of the position pointing device with respect to the input detecting surface with multi levels of resolutions; and an interface device (3) which receives information of the position coordinate obtained by the position coordinate detecting device and information of the pressure obtained by the pressure detecting device, respectively, and which transmits the received information to an associated information processing device after having been integrated or converted into an appropriate form. The position coordinate input device may be overlapped on a screen of a display device (4;14) to form an integrated input/output type device.

**Fig. 15**

EP 1 059 604 A2

## Description

BACKGROUND OF THE INVENTION

(1) Field of the Invention

The present invention relates to a coordinate input device used for inputting instructions into an information processing device. In particular, it relates to the coordinate input device which allows handwriting input by a pen or the like and further which allows direct input with a finger itself. The invention furthermore relates to a coordinate input device which is integrally formed with a display device.

(2) Description of the Related Art

A device to input the position of an operating instrument, operated by an operator, into an information processing device such as a personal computer is generally called a digitizer or a tablet. A pen shaped operating instrument is called an electronic pen which allows handwriting input such as signing. In this kind of device, not only the coordinate of the pointed position, but also is required the information as to whether the tip of the pen touches a writing surface, or how the pressure reacts on the pen tip. Without such information, each stroke of a letter cannot be recognized. Here, "the pen is usable" in this specification means that at least each stroke of a written letter is distinctly recognized.

Among the conventional position detecting devices, currently the electromagnetic induction type is a main stream. This electromagnetic induction system is such that a two-dimensional coordinate is obtained from a planar surface distribution of electromagnetic wave radiated by the position pointing device itself. A mechanism to detect the pen pressure is normally incorporated within the pen. An example of such a pen pressure detecting mechanism which is incorporated inside a pen is disclosed in Japanese Patent Application Laid-Open No. H3-67318. In the mechanism disclosed therein, a change in the static capacitance as the pressure changes is detected. The position detecting device incorporating such pen pressure detecting mechanism is now in practical use.

A typical load sensor with the variable static capacitance type is disclosed in, for example, Japanese Patent Application Laid-Open No. H7-55615. In this load sensor, the load is measured by the detection of a change in the static capacitance between the electrodes when the distance therebetween is shortened. A load sensor alone of this kind, however, is not sufficient to measure the coordinate of the position pointing device.

Japanese Patent Application Laid-Open No. S61-36823 discloses an example of a mechanism wherein a circuit to detect a pen pressure is not incorporated within the pen itself. In this example, a magnet detecting system to detect the permanent magnet arranged within the pen is employed to detect the coordinate of the pen, and a pressure sensitive rubber sheet is disposed on the inputting surface so that the contact of the pen to the board surface can be detected. This example, however, has not been implemented for practical application.

On the other hand, there are various kinds of devices which give input instructions to an information processing device based on the detection of a position of an operator's finger. Such devices are generally called as touch panel input devices. The touch panel input device is an input device which inherently allows relatively easy selecting operation, and it is widely used, especially in the commercial fields. Many of these systems adopt a simple operating principle construction wherein a number of switches are arranged in a matrix form. Needless to say, this touch panel system is unusable for handwriting input by a pen for signature verification or the like.

In recent years, an integral coordinate input device for both the input and output operation has been realized in which a surface for a coordinate input device for input is placed on a surface for a liquid crystal display device. There are two types of the integrated type coordinate input devices, one being descended from the conventional touch panel system and the other being from so called digitizers.

An integral touch panel type coordinate input device for inputting and outputting is to give instructions to the information processing device by selecting a menu displayed on a screen directly with a finger of the operator. This task requires only to distinguish which menu is selected and, therefore, only relatively a rough resolution capability is required. In general, this kind of touch panel, even when it is used on a dedicated hardware for a special purpose or on a general purpose personal computer, is used with a dedicated software. More specifically, the devices of this type are used as an input means of a vending machine for tickets at a train station, or an ATM terminal at a bank. There is a matrix electrode system using a transparent conductive sheet or a system for detecting an interruption of light beams aligned horizontally and vertically, respectively. In either system, it does not have such fine resolution that allows a position coordinate detection for character wiring, and it has usually only a two-level resolution for pressure detection which is merely capable of recognizing whether the operator's finger has touched the input surface or not.

As explained above, many of the commercially available touch panel type input devices are capable of detecting the coordinate with rather relatively rough accuracy. There is, however, a system in which a finer detection of the finger position is realized by using light as disclosed in Japanese Patent Application Laid-Open No. S62-5428. This system allows accurate detection of the coordinate of the position pointing device, but as it does not have a means for detecting the pressure, the system cannot be used for the detection of handwriting which is required for the verification of signature.

On the other hand, a digitizer (or a tablet) is equipped with relatively fine resolution to detect a coordinate which enables it to cope with an operation of the graphical user interface (GUI) of the operating system (OS) that is used in a present-day personal computer. The operating instructions in this system require a dedicated electronic pen as a position pointing device. Operations of icons and menus on a screen, which are operation targets of the current GUI, are effected based on a mouse operation because of their small sizes. Though the direct operation of the icons and menus with the operator's finger is technically available, it is very difficult to have it operated and its practicability is rather low. For this reason, the electrical pen is indispensable in operating an operating system or an application software. As specific examples of such products, there are a pen input personal computer and a liquid crystal integrated type digitizer.

At an ATM bank terminal, it is used that confirmation of an operator (personal identification) is conducted by the input of an identifying code number. However, the identifying code number is hard to remember in some cases, and once it has been known to any other person, it may easily be abused. To overcome such a problem, there is a trend in the United States and Europe to employ a signature verification for the personal identification. There is less possibility that his or her own signature is forgotten once the person remembers how to sign, and it is difficult for other persons to imitate. For this kind of signature input to verify the signature, a tablet which is used with an electronic pen is adopted. Recently, there have been made some specific attempts to incorporate the electronic pen system into the ATM terminals.

For a tablet which is used to verify a signature, it is required that the delicate touch of the pen tip on the surface be distinguished and high accuracy of the coordinate detection be maintained. If the pressure level at the tip of the pen can be detected in multi levels, this pressure information can be taken into consideration in the identification, which will enhance the security level for the signature verification. Up to now, only the electromagnetic induction type tablet has met with the requirement for this kind of application.

There are, however, other operations at ATMs which do not require signature verification, such as making deposits, in which case the operation by a finger may be preferred. However, the conventional electromagnetic induction type tablet cannot be operated by a finger only. Therefore, by the sole electromagnetic induction type tablet, it has not been able to yield a desired device.

A predominant system for a digitizer or a tablet with high precision is the electromagnetic induction system. This system, however, cannot be operated without a position pointing device having an electronic circuit, namely its own dedicated electronic pen. This position pointing device has a circuit to detect the pressure loaded on the pen tip in addition to a circuit to detect the coordinate. Since this system requires a dedicated pen, it cannot be operated with a finger itself.

There is also realized an integrated type coordinate input device with the electromagnetic induction system, which is integrated with a liquid crystal display. This system, however, requires that an antenna for detecting an electromagnetic wave be arranged on the backside of the liquid crystal display. In this system, since the electromagnetic wave penetrates the liquid crystal display device, the cost for processing metal parts of the liquid crystal, such as bezel, processing of a backlight, dealing with an electromagnetic noise, and the like becomes inevitably high. As mentioned above, since this system cannot be operated with a finger itself, it has been cumbersome in the actual use.

There exist systems that can be operated by not only a pen but also a finger itself, such as the pressure sensitive resistance membrane system, in which coordinates are calculated by detecting the pressure distribution. This system, however, has a problem with durability. Especially, in the case of operating the system with a pen, a strong pressure is concentrated on the surface at the tip portion of the pen so that the pressure sensitive surface is liable to be damaged. There also exists an integral type input device in which a transparent conductive membrane is used as the pressure sensitive resistance membrane in a manner of placing it on top of the display device. In this case, it is difficult to increase the degree of transparency of the conductive membrane, so the display on the display device becomes blurred.

The system proposed in Japanese Patent Application Laid-Open No. S62-5428, which uses light to specify the position of the finger, is capable of detecting the position of the finger, but the pressure of the finger applied cannot be detected. In this system, a pen or the like in lieu of a finger can be used to detect a pointing position, but the pen pressure cannot be detected, which makes the system unsuitable for writing a character in a normal way, and which makes the system unusable for handwriting input of a signature.

In the case of detecting finger pressure or pen pressure, to make its sensitivity as close as possible to human sensitivity, it is preferred for the final output of the pressure sensor to have logarithmic characteristics in such a way that it responds with high sensitivity to a slight pressure, but not with low sensitivity to a large pressure. In the case of the configuration of the device as shown in Japanese Patent Application Laid-Open No. H7-55615, the distance between the electrodes becomes small by the application of pressure, thereby showing opposite characteristics rather than the preferable ones. This is because the static capacitance C is in general represented by the following formula (1):

$$C = \varepsilon \times S/L \qquad (1)$$

Here, $\varepsilon$ is a dielectric constant, S is an effective area of the electrode, and L is a distance between the electrodes.

As can be appreciated from the above formula (1), it is preferred to configure the device in such a way that the distance between electrodes become wider as the pressure increases.

SUMMARY OF THE INVENTION

The present invention is aimed at providing a coordinate input device which makes it possible to be operated either by an ordinary pen without using a dedicated electronic pen for the device, or by a finger itself. Furthermore, the invention is aimed at providing an integral type coordinate input device in which a coordinate input device and a display device are formed as one body.

According to the present invention, there is provided a position coordinate input device for inputting instructions to an information processing device based on operations performed on an input detecting surface with a position pointing device, the position coordinate input device allowing use of a finger or a pen as the position pointing device, the position coordinate input device characterized by comprising:

a position coordinate detecting device which detects a coordinate of a pointed location pointed by the position pointing device located on the input detecting surface;
a pressure detecting device which is arranged in the input detection surface, and which detects a pressure of the position pointing device against the input detecting surface with at least three levels of resolutions; and
an interface device which receives information of the position coordinate obtained by the position coordinate detecting device and information of the pressure obtained by the pressure detecting device, respectively, and which transmits the received information to the information processing device after having been integrated or converted into an appropriate form.

The position coordinate detecting device of the present invention comprises:

an optical means for irradiating light which passes parallel to the input detecting surface;
a retroreflective member for reflecting the light irradiated from the optical means in a direction of returning the light straight back to the direction in which the light came from; and

a linear photoreceptor for receiving the light reflected by the retroreflective member, the linear photoreceptor detecting the interrupted position of the light passing parallel to the input detecting surface from at least two directions.

The pressure detecting device of the present invention comprises:

a flat input board which has an appropriate rigidity and forms the input detecting surface;
an elastic supporting member which has an appropriate elasticity and supports the flat input board in such a way that entirety of the input detecting surface slightly goes downwardly upon application of pressure on the input detecting surface;
a movable electrode moving in accordance with movement of the flat input plane;
a fixed electrode arranged parallel to and adjacent to the movable electrode; and
a static capacitance detecting circuit which detects changes in static capacitance between the movable electrode and the fixed electrode.

In order to ensure the detection of a pressure close to a zero pressure, the flat input surface and the movable electrode are configured to be free to move with respect to the aforementioned fixed electrode without limiting its free movement by the application of a certain amount of pressure in advance on the input detecting surface. In this way, detection of even a very small pressure nearly the zero pressure becomes possible.

The movable electrode is so arranged that it moves in a direction to increase the distance from the fixed electrade by the application of pressure on the input detecting surface. In this way, the detection sensitivity near the zero pressure increases, this showing a characteristics of a logarithmic curve that is close to the human sensitivity.

The device is further comprised of a dielectric material disposed between the movable electrode and the fixed electrode. In this way, since a fine space between the electrodes can be accurately maintained, the actual assembly task has been simplified. Furthermore, because the static capacitance increases by the provision of the dielectric film, it has been made possible to achieve more stable measurement.

The device further includes a display device to perform an output display of the information processing device, and the flat input device made of a transparent member is overlapped on the display device. In this way, by combining with a liquid crystal display, an integrated input/output consolidation type device has been achieved.

BRIEF DESCRIPTION OF THE DRAWINGS

The above and other objects, features and advantages of the present invention will be apparent from the following description of preferred embodiments of the invention explained with reference to the accompanying drawings, in which:

Fig. 1 is a block diagram showing an embodiment of a coordinate input device in accordance with the present invention;

Fig. 2 is a block diagram showing an embodiment of an integrated input/output type coordinate input device in accordance with the present invention;

Fig. 3 is a diagrammatic cross-sectional view showing a first embodiment of the pressure detecting device used in the coordinate input device in accordance with the present invention, Fig. 3(a) showing a state with no pressure and Fig. 3(b) showing a state with a pressure;

Fig. 4 is a diagrammatic cross-sectional view showing a second embodiment of the pressure detecting device used in the coordinate input device in accordance with the present invention, Fig. 4(a) showing a state with no pressure and Fig. 4(b) showing a state with a pressure;

Fig. 5 is a diagrammatic cross-sectional view showing a third embodiment of the pressure detecting device used in the coordinate input device in accordance with the present invention, Fig. 5(a) showing a state with no pressure and Fig. 5(b) showing a state with a pressure;

Fig. 6 is a diagram showing a fourth embodiment of the pressure detecting device used in an integrated input/output type coordinate input device in accordance with the present invention, Fig. 6(a) showing a state with no pressure and Fig. 6(b) showing a state with pressure;

Fig. 7 is a diagram showing a fifth embodiment of the pressure detecting device used in an integrated input/output type coordinate input device in accordance with the present invention, Fig. 7(a) showing its overall view, Fig. 7(b) showing a state with no pressure and Fig. 7(c) showing a state with pressure;

Fig. 8(a) is a block diagram of a circuit of the pressure detecting device in accordance with the present invention, and Fig. 8(b) is a timing chart of each signal;

Fig. 9 is a block diagram showing an embodiment of the position coordinate detecting device using light which is used in a coordinate input device in accordance with the present invention;

Fig. 10 is a block diagram showing a general configuration of an optical unit of the position coordinate detecting device using the light which is used in a coordinate input device in accordance with the present invention;

Fig. 11 is a diagram showing a calculation method of coordinates in a coordinate detection device, which uses light;

Fig. 12 is a detailed block diagram of a coordinate input device in accordance with the present invention;

Fig. 13 is a diagram showing the image in the case of using the finger for a coordinate input device in accordance with the present invention;

Fig. 14 is a diagram showing the image in the case of using the pen for a coordinate input device in accordance with the present invention; and

Fig. 15 is a diagram showing the image in the case of using a finger or a pen for an integrated input/output type coordinate input device in which a display device is combined with a coordinate input device in accordance with the present invention.

DESCRIPTION OF THE PREFERRED EMBODIMENTS

With reference to the accompanying drawings, some preferred embodiments of the invention will be explained hereunder.

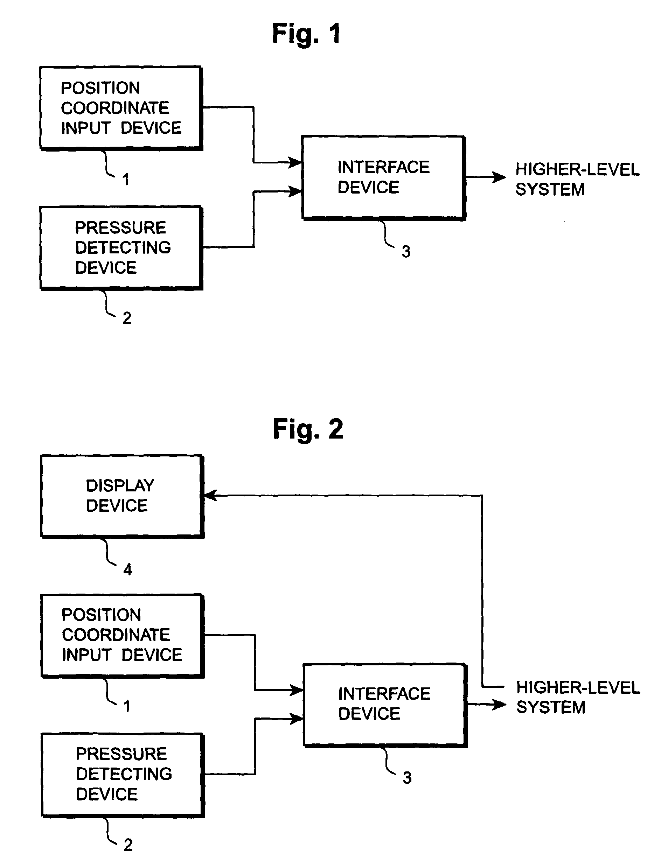

Fig. 1 is a block diagram to show a first embodiment of the coordinate input device in accordance with the present invention. The coordinate input device is comprised of a position coordinate detecting device 1 to detect the position coordinate of an input by a position pointing device such as a pen or a finger; a pressure detecting device 2 to detect the pressure of the input by the position pointing device; and an interface device 3 to receive the detected signals from the above detecting devices and to transmit them after having been converted to the signals suitable to the signal processing performed at the higher-level systems. Here, the higher-level systems mean a general purpose personal computer or a dedicated information processing device or the like. An electric connection between the device of the present invention and the higher-level system is realized via an I/O interface such as RS-232C or USB.

The position detecting device 1, the detail of which will be explained later, is capable of detecting a coordinate of a pointed position on a plane or flat input surface, the preferred position coordinate detecting device being the one which uses light. The pressure detecting device 2, the detail of which is described later, is capable of detecting the pressure with respect to the flat input surface with at least three levels or more resolution. The preferred pressure detecting device is of a static capacitance detecting type equipped with a capacitance pressure sensor.

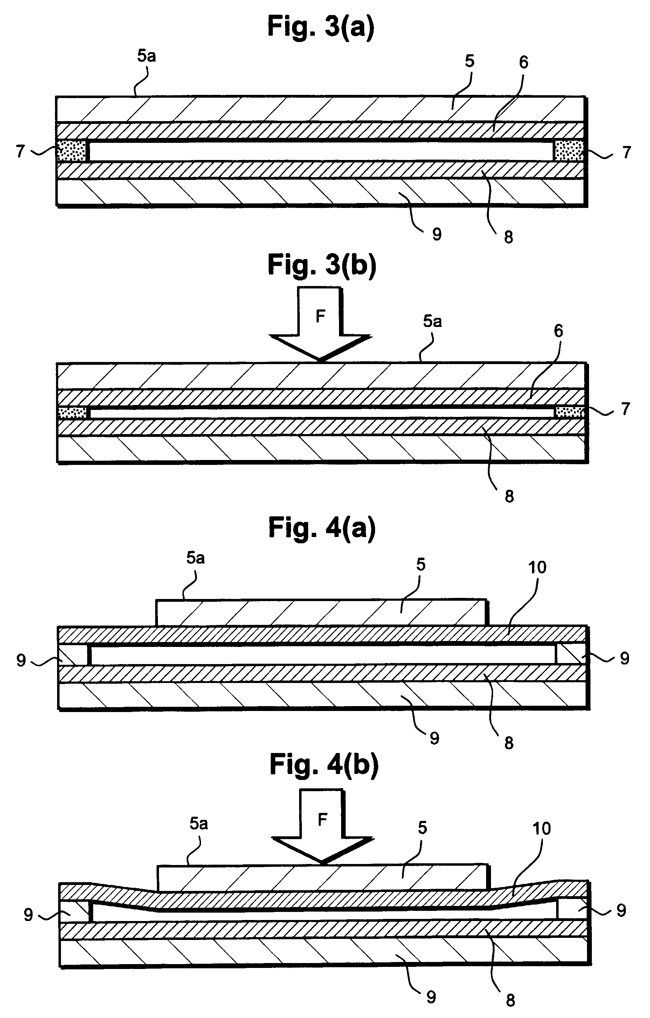

Fig. 2 is a block diagram to show an integrated input/output type coordinate input device in which a display device 4 is added to the coordinate input device shown in Fig. 1. The display control of the display device 4 is conducted by the higher-level systems. For this display device 4, a liquid crystal display, a plasma display, or a flat surface CRT can well be used.

Now, a more specific example of the embodiment of the coordinate input device, in accordance with the present invention, shall be explained. Fig. 3 is a diagrammatic cross-sectional view to show the static capacitance type pressure sensor which is used as the pressure detecting device for the coordinate input device of the present invention. Fig. 3(a) shows a state where no pressure is applied on an input detecting surface 5a. The flat input board 5 having the input detecting surface 5a is made of material with an appropriate degree of rigidity, and a movable electrode 6 is fixed to the undersurface thereof. Then, a fixed electrode 8 is provided underneath the movable electrode 6 with an elastic supporting member 7 partially intervened between both the electrodes. The fixed electrode 8 is fixed to the fixed structural member 9 so as to prevent from moving. Examples of specific material that can be used are glass epoxy resin laminate for the flat input board 5, copper plate for the movable electrode 5 and the fixed electrode 8, and rubber for the elastic supporting member 7. Fig. 3(b) indicates a state where pressure is applied on the input detecting surface 5a, namely, a state when an inputting is being made by a pen or a finger or the like. As shown in this drawings, the elastic supporting member 7 contracts by the pressure F, and the movable electrode 6 moves closer to the fixed electrode 8. Accordingly, the static capacitance between the two electrodes increases. By measuring this capacitance, the pressure can be reversely calculated. Because the level of the pressure can be detected at least in three or more levels of resolutions, the device is capable of detecting not only the state of input/non-input but also the strong and weak of the input.

In order to make the detection of a pressure close to zero pressure, the flat input board 5 and the movable electrode 6, which constitute the input detecting surface 5a, are configured to be movable freely without limiting the free movement by placing a certain amount of pressure in advance on the input detecting surface. In the case where a sheet of paper or the like is placed on top of the input detecting surface to input by a pen or a pencil or the like which allows actual writing of letters on the paper, it is possible to offset the weight of the paper in advance, to keep the state, with paper to be zero pressure. Also, it is desirable to configure the device in such a manner that the movable electrode 6 will not go down obliquely so as to ensure that the movable electrode 6 approaches toward the fixed electrode 8 evenly.

Fig. 4 is a diagram to show a second embodiment of the pressure detecting device used in the coordinate input device of the present invention. Fig. 4(a) shows a state when there is no pressure, and Fig. 4(b) shows a state when the pressure F is applied. The same reference numeral as that in Fig. 3 indicates the same or like component, and a duplicate explanation thereof is omitted here. In this example, as an electrode 10 which constitutes the movable electrode has an appropriate elasticity, the electrode 10 itself has the function of the elastic supporting member 7 in Fig. 3. A specific example of the material for the movable electrode 10 with elasticity is an elastic phosphorus bronze or the like. As illustrated in Fig. 4, the elastic movable electrode 10 deforms its shape to come closer to the fixed electrode 8. In this manner, in the same way as the pressure detecting device in Fig. 3, the static capacitance between the two electrodes increases and, by measuring this capacitance, the pressure can be reversely calculated.

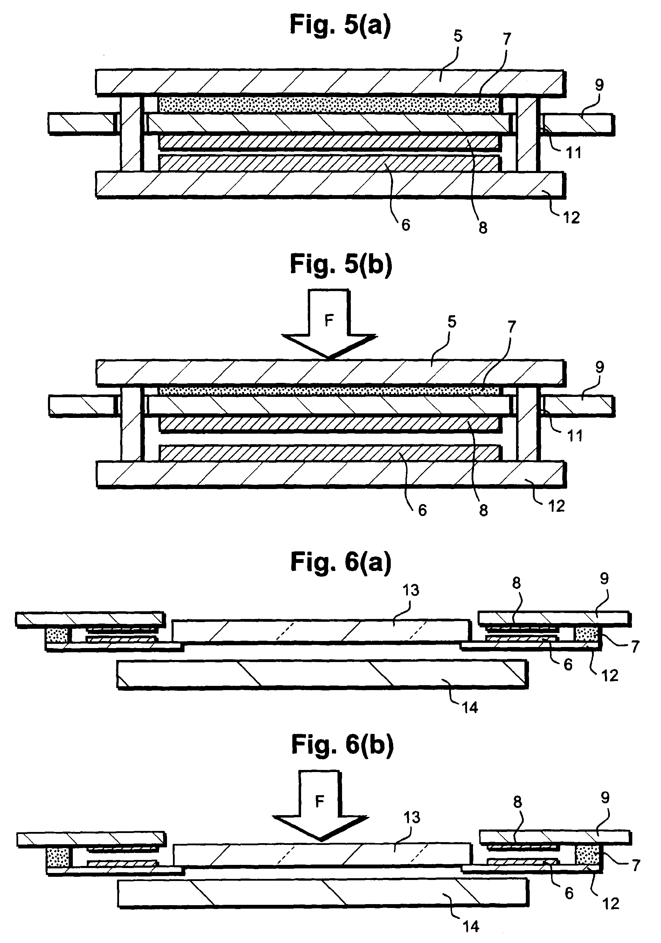

Fig. 5 shows a third embodiment of the pressure detecting device which is used in the coordinate input device of the present invention. A flat input board 5 is disposed over a fixed structural member 9 with an elastic supporting member 7 being intervened therebetween, and it is connected to a movable structural member 12 under the fixed structural member 9 through holes 11 formed in the fixed structural member 9. A fixed electrode 8 is fixed to the undersurface of the fixed structural member 9, and is opposed to a movable electrode 6 which is fixed on the upper surface of the movable structural member 12. Fig. 5(a) indicates the state where there is no pressure. In this state, a slight space is kept between the movable electrode 6 and the fixed electrode 8. Fig. 5(b) indicates the state when the pressure F is applied to the input board 5. When the flat input board 5 is pressed downwardly, the movable electrode 6 moves in the direction apart from the fixed electrode 8, namely, in the direction that the distance between these two electrodes increases. The capacitance between the electrodes decreases accordingly. By measuring this capacitance, the pressure can be reversely calculated. With the device being constructed as above, sensitivity characteristics of the device becomes similar to those of a human being. The device has a high sensitivity to a slight pressure whereas less sensitivity to a larger pressure.

Fig. 6 shows a fourth embodiment of the pressure detecting device used in the integrated input/output type coordinate input device corresponding to Fig. 2, according to the present invention. A transparent flat input board 13 is fixed at its two edge portions to the respective movable structural members 12. The liquid crystal display device 14 is aligned underneath the flat input board 13 in an overlapping way. Fig. 6(a) shows the state with no pressure. In this state, a slight space is kept between a movable electrode 6 fixed to an upper surface of the movable structural member 12 and a fixed electrode 8 fixed to the undersurface of a fixed structural member 9. Fig. 6(b) shows the state when there is applied a pressure F to the flat input board 13. When the flat input board 13 is pressed downwardly, the movable electrode 6 moves in the direction apart from the fixed electrode 8. The capacitance between these electrodes decreases accordingly. Therefore, in the same manner as the pressure detecting device shown in Fig. 5, by measuring this capacitance, the pressure can be reversely calculated. Since the flat input board 13 can be made of a completely transparent member, the viewing on the display screen through the input board becomes very clear.

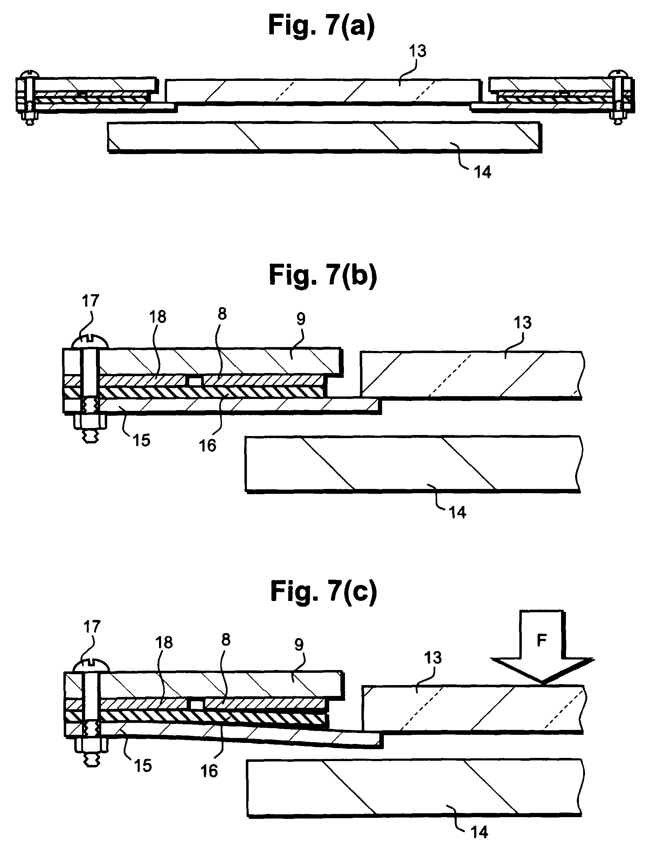

Fig. 7 shows a fifth embodiment of the pressure detecting device used in the integrated input/output type coordinate input device corresponding to Fig. 2, according to the present invention. Fig. 7(a) shows an outline of the whole view, and Fig. 7(b) and Fig. 7(c) show the details thereof. Fig. 7(b) is a state when there is no pressure. The fixed electrode 8 and the fixed structural member 9 are formed by printed circuit boards. More specifically, the fixed electrode 8 is formed by a portion of a copper plate pattern of the printed circuit board. The elastic movable electrode 15 also functions as an elastic supporting member, and is made of an elastic phosphorous copper plate. The elastic movable electrode 15 is fixed to the printed circuit board in such a manner that a dielectric film 16 for maintaining a fine distance between the electrodes is sandwiched therebetween. In the example illustrated here, the printed circuit board having thereon the fixed electrode 8, dielectric film 16 and the phosphorous copper plate forming the movable electrode 15, are fixed by a screw 17. Fig. 7(c) shows the state with the pressure F being applied on the flat input board 13. When the pressure F is applied to the flat input board 13, the movable electrode 15 warps downwardly, and moves in the direction apart from the fixed electrode 8, thereby causing the capacitance to decrease. By measuring the change in capacitance, the pressure F can be reversely calculated. With the device being constructed as above, sensitivity characteristics of the device become similar to those of a human being. The device has a high sensitivity to a slight pressure whereas less sensitivity to a larger pressure.

As is clearly shown respectively in Figs. 7(a) and 7(b), in this embodiment, it is preferable that the copper plate pattern of the printed circuit board be appropriately divided as shown by the reference numerals 8 and 18, and the copper plate patterns which largely go away from the movable electrode 15 when the pressure F is applied to the flat input board 13 be used as the fixed electrode. In this way, the rate of change in the capacitance in accordance with the pressure F applied to the flat input board 13 becomes larger. In the case of the illustrated embodiment, between the copper plate patterns 8 and 18, the copper plate pattern 8, which is close to the flat input board 13, is used as the fixed electrode.

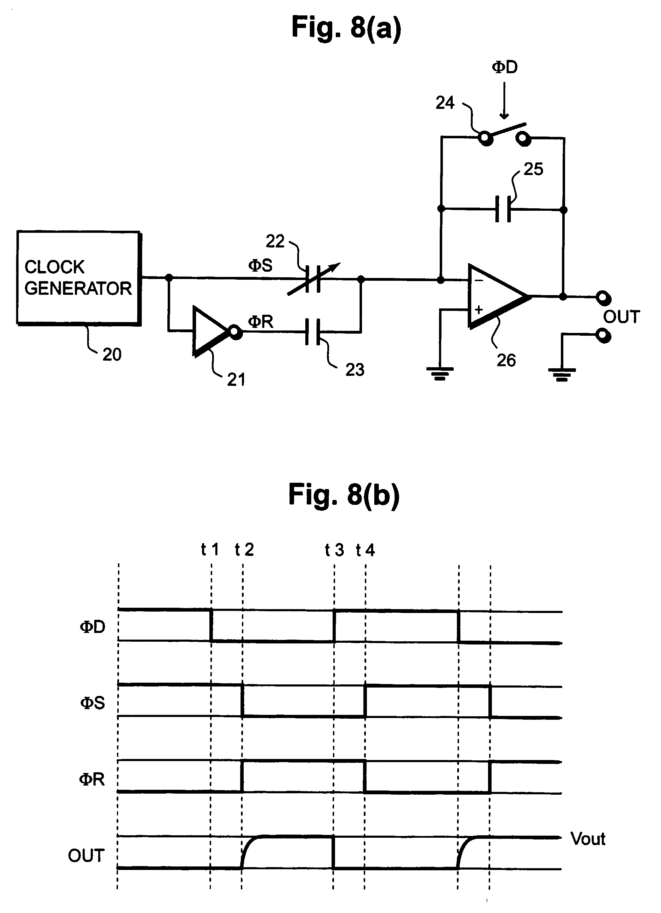

Fig. 8(a) shows an example of the circuit of the pressure detecting device, and Fig. 8(b) shows a timing chart of the respective signals therein. A variable capacitor 22 is a capacitance defined by the movable electrode and the fixed electrode, in which the capacitance changes by the pressure applied to the input detecting surface. A signal $\Phi S$ represents a clock signal supplied from a clock generator 20, a signal $\Phi R$ represents an inversed signal of the clock signal $\Phi S$ which is inversed by an inverter 21, a signal $\Phi D$ represents a control signal to control an analogue switch 24 in order to conduct a discharging of feedback capacity 25 for integration of the operational amplifier 26, and a signal OUT represents an output signal of the pressure detecting device, respectively. First, when the control signal $\Phi D$ is at Hi points, the analogue switch 24 turns ON, the feedback capacity is short-circuited, and the output signal is zero. Next, at the timing t1, the control signal $\Phi D$ becomes Low, the analogue switch 24 turns off, followed by the timing t2 whereby the clock signal $\Phi S$ becomes Low, and the inverted signal $\Phi R$ becomes Hi, then the voltage applied to the capacitors 22 and 23 is inverted, whereby electric current begins to flow to the feedback capacity 25, and when a time based on the time constant passes, the electric potential becomes stable. The output voltage at this time is $V_{OUT}$. Then, at the timing t3, the control signal $\Phi D$ becomes Hi, the feedback capacity 25 is again short-circuited and, at the timing t4, the clock signal $\Phi S$ returns to Hi and the inverted signal $\Phi R$ to Low, respectively, the voltage, which is applied to two capacitors 22, 23, is normalized and returns to the initial condition. Thereafter the same sequence is repeated. This $V_{OUT}$ is converted to digital value by the A/D converter, which will be described later, and taken into the CPU.

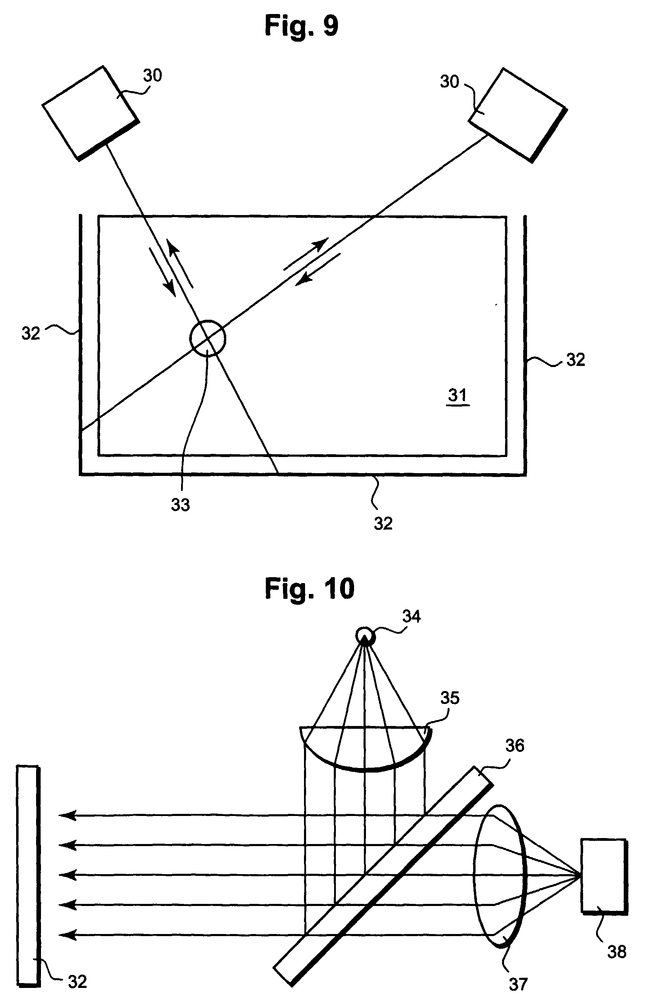

Now, with reference to Fig. 9 and Fig. 10, an embodiment of the position coordinate detecting device with the use of light, which device is used for the coordinate input device in accordance with the present invention, will be described hereunder. The position coordinate detecting device is not limited to the illustrated one as far as it is capable of detecting the interrupted position of light which passes parallel to the flat input surface and, thus, certain devices of different configurations can well be employed. Two optical units 30, each of which is configured to project light and to detect the reflected light, are placed at the right and left portions of the upper portion of the input detecting surface 31. Also, the retroreflective members 32, which possess retroreflective characteristics, are placed at three portions, that is, at the right and left sides and lower side of the input detecting surface 31. The retroreflective characteristics here are the characteristics wherein the incoming radiation returns straight to the direction in which the light came from. A typical retroreflective member is commercially available as a retroreflective sheet in which a number of small transparent beads are embedded in the sheet. Recently, those which have excellent retroreflective characteristics to return the radiation incident at a low angle to the direction in which the light came from in accurately, have become available. Where there exists nothing on the input detecting surface 31 to interrupt light, the light radiated from the optical unit 30, passes over the input detecting surface 31, incidents on the retroreflective member 32, and then returns to the optical unit 30 by passing through the reversed light path. When a position pointing device 33 such as a finger or a pen is placed on the input detecting surface, a portion of the light path is blocked and the light becomes unable to return to the optical unit 30. By detecting the direction of this shadow with the optical unit 30, the direction of the object which interrupted the light can be detected. In other words, if the direction where the position pointing device exists is detected by two separate optical units 30, exact location of the position pointing device can be calculated through the principle of the triangulation.

Fig. 10 is a diagrammatic view to show an example of a typical configuration of the optical unit 30 for use in the optical coordinate detection device. Light emitted from a point light source 34, after having been converted into a fan shaped planar light flux by the cylindrical lens 35, is reflected perpendicularly by a half mirror 36. The reflected light goes across over the input detecting surface 31 and impinges on the retroreflective member 32. The light impinged on the retroreflective member 32 is reflected straight back to the direction in which the light came from, goes across over the input detecting surface 31 again, then passes through the half mirror 36, is further converged by a lens 37, and is finally received by a linear charged coupled device (linear CCD) 38. Then, by this linear CCD 38, the direction of the shadow caused by the position pointing device is detected. It should be understood that the coordinate detecting device is not limited to the illustration one and that, as an example, other device using a reflecting mirror with a slit instead of the half mirror can well be used as far as the location of the position pointing device can be detected.

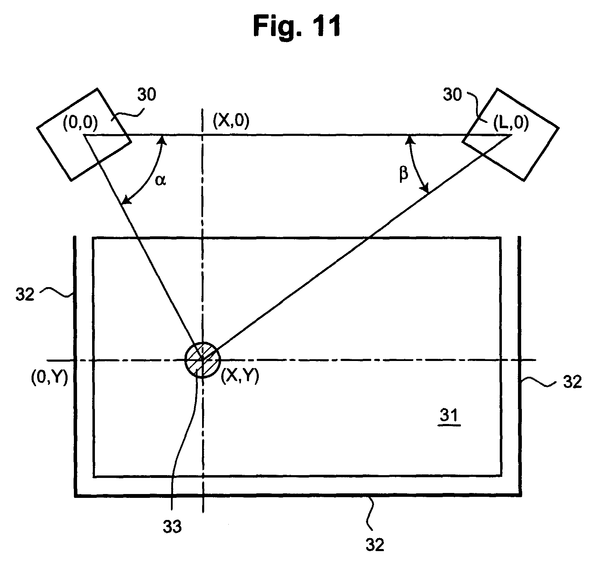

Fig. 11 is a diagrammatic view to show the method of calculating the position coordinate of the position pointing device based on the known triangulation principle. First, respective angles α and β, when the position pointing device 33 is detected, are measured by the optical units 30, respectively. Assuming that the distance between two optical units 30 is L, the following equations (2) and (3) are established.

$$Y = X \cdot \tan\alpha \qquad (2)$$

$$Y = (L - X) \cdot \tan\beta \qquad (3)$$

Here, X and Y represent the position coordinates of the position pointing device.

Using the equations (2) and (3) to find X, the following equation (4) is established.

$$X = (L \cdot \tan\beta) / (\tan\alpha + \tan\beta) \qquad (4)$$

By using these equations (2) and (4), once the angles α and β are detected, the position coordinates (X, Y) of the position pointing device 33 such as a finger or a pen on the input detecting surface can be calculated.

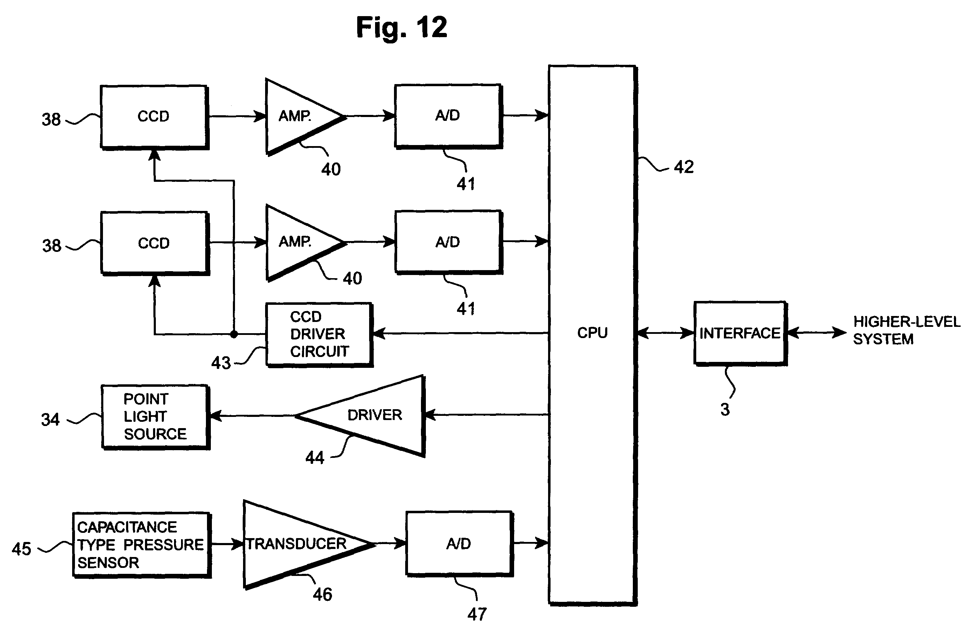

Fig. 12 is a detailed block diagram of the embodiments according to the present invention. After the signal outputted from the linear CCD 38 of the optical unit 30 is appropriately amplified by an amplifier 40, it is converted to a digital signal by an A/D converter 41, and then inputted to a CPU 42. A CCD driver circuit 43 functions to supply to the CCD 38 such timing signals as a clock signal which is necessary to drive the CCD device. The point light source 34 of the optical unit 30 is controlled by the CPU 42 through the driver circuit 44 which is formed by transistors or the like. The signal of the capacitance type pressure sensor 45 which forms the pressure detecting device is converted to an electric signal by a transducer 46, and further converted to a digital signal by an A/D converter 47, and then inputted to the CPU 42. The CPU 42 is connected to a higher-level system such as a personal computer through the interface device 3, for example, RS-232C or the like. With the device being constructed as above, since the location of the position pointing device such as a pen or a finger is detected by the CCD 38 of the position coordinate detecting device and, at the same time, the pressure of the pointing device on the surface is detected with three or more levels of resolution by the capacitance type pressure sensor 45 of the pressure detecting device, not only the direct operation on the screen by a finger but also the recognition of a delicate touching of the pen tip on the screen such as pen pressure for signature have been made possible.

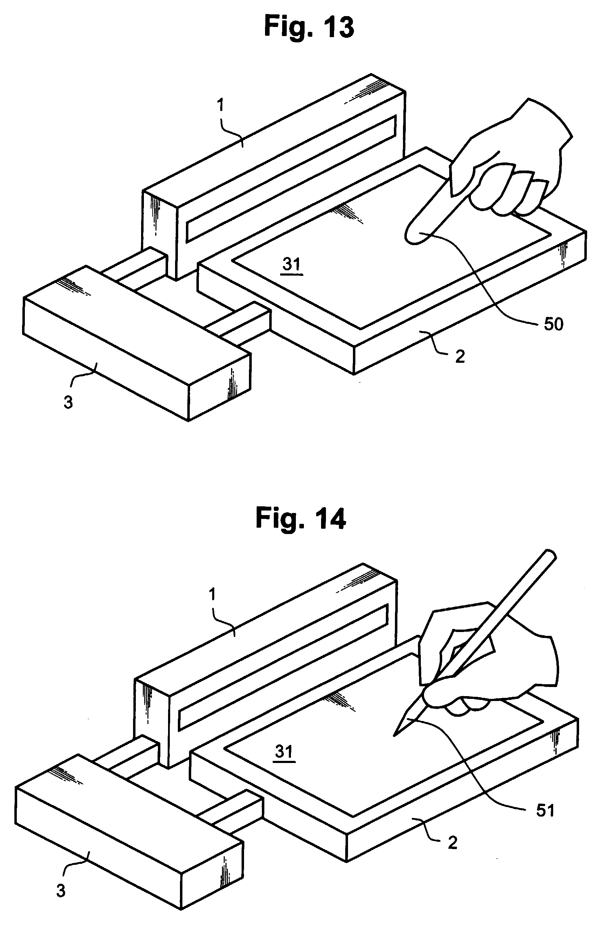

Fig. 13 is an image sketch to show the case wherein an operator's finger itself is used as the point device for the coordinate input device according to the present invention. The finger 50 placed on the input detecting surface 31 of the pressure detecting device 2 is capable of conducting a relatively simple operation such as selecting input operation. In this case, the pressure detecting device 2 detects the position coordinate of the finger 50 optically whereas the pressure detecting device 2 detects the pressure of the finger 50 with respect to the surface, and the information thus detected is then transmitted to a higher-level system such as a personal computer, via the interface device 3.

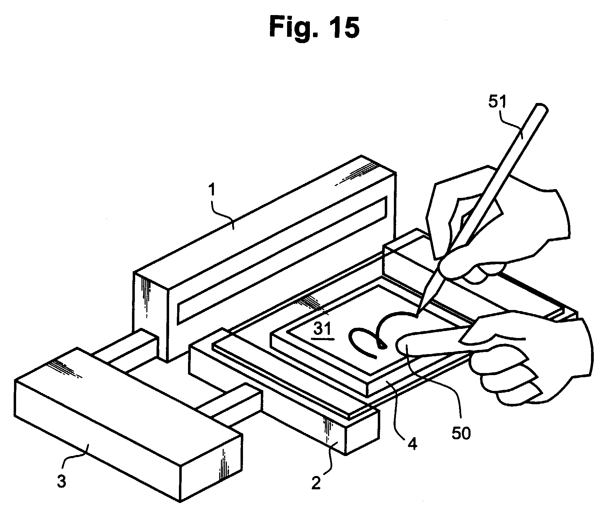

Fig. 14 is an image sketch to show the case wherein a pen is used as the point device for the coordinate input device according to the present invention. On the input detecting surface 31 of the pressure detecting device 2, it is possible to input the information of handwriting such as a signature using a pen 51. In this case, the position coordinate detecting device 1 detects the position coordinate of the pen 51 optically and the pressure detecting device 2 detects the pressure of the pen 51, and the information thus detected is transmitted to a higher-level system such as a personal computer, through the interface device 3. Because, in this device, the pressure detecting device has a capability of detecting the pressure with at least three or more levels of resolutions, recognition of a delicate touching of the pen tip, which is very important for the verification of a signature, has been made possible.

Fig. 15 is an image sketch to show the case wherein an operator's finger or a pen is used as the pointing means for the integrated input/output type coordinate input device of the present invention, which device is combined with a display device 4. For the display device 4, a liquid crystal display device, a plasma display device, or a flat CRT and the like can well be used. In this example, since the input detecting surface 31 can be made of transparent glass, the input detecting surface will not be damaged even when an input is made by a pen with a hard and sharp pen tip.

Though the explanation has been made heretofore on the embodiments of the position coordinate detecting device of the optical type, the present invention is not limitative to the optical type, a pressure sensitive type resistance membrane can be adopted, for example, in the case where a relatively rough resolution is sufficient for the purpose. For the pressure detecting device, references have been made to the system that uses static capacitance, but the present invention is not limited to this system. Other systems can be adopted as long as the system is capable of detecting the pressure with at least three or more levels of resolutions. As one example, a distortion gauge may be used to measure the pressure.

As has been explained hereinabove, according to the present invention, a coordinate input device which allows an operation either by a pen or a finger itself, without requiring a special input device such as a dedicated electronic pen, is realized. Since the flat input board can be made to be transparent, an integrated input/output type coordinate input device is easily realized by arranging a display device such as a liquid crystal display underneath the flat input board.

In the case where a capacitance type pressure sensor is used as the pressure detecting device and an optical type position detecting device is used as the position coordinate detecting device, there occurs no problem relating to the electromagnetic noises even if the display device is arranged immediately underneath the above detecting devices or sensors. Also, with the device according to the present invention, the cost related problems have been resolved.

While a preferred embodiment of the invention has been described using specific terms, such description is for illustrative purposes only, and it is to be understood that changes and variations may be made without departing from the spirit or scope of the following claims.

## Claims

1. A position coordinate input device for inputting instructions to an information processing device based on operations performed on an input detecting surface (5a;31) with a position pointing device, said position coordinate input device allowing use of a finger (50) or a pen (51) as said position pointing device, said position coordinate input device characterized by comprising:

   a position coordinate detecting device (1) which detects a coordinate of a pointed location pointed by said position pointing device located on said input detecting surface;
   a pressure detecting device (2) which is arranged in said input detection surface, and which detects a pressure (F) of said position pointing device against said input detecting surface with at least three levels of resolutions; and
   an interface device (3) which receives information of the position coordinate obtained by said position coordinate detecting device and information of the pressure obtained by said pressure detecting device, respectively, and which transmits said received information to said information processing device after having been integrated or converted into an appropriate form.

2. A position coordinate input device as claimed in claim 1, wherein said position coordinate detecting device detects an interrupted position of light passing parallel to said input detecting surface from at least two directions.

3. A position coordinate input device as claimed in claim 1 or 2, wherein said position coordinate detecting device comprises:

   an optical means (34) for irradiating light which passes parallel to said input detecting surface;
   a retroreflective member (32) for reflecting the light irradiated from said optical means in a direction of the light returning straight back to the direction in which the light came from; and
   a linear photoreceptor (38) for receiving the light reflected by said retroreflective member, said linear photoreceptor detecting the interrupted position of the light passing parallel to said input detecting surface.

4. A position coordinate input device as claimed in claim 1 or 3, wherein said pressure detecting device comprises:

   a flat input board (5;13) which has an appropriate rigidity and forms said input detecting surface;
   an elastic supporting member (7;10;15) which has an appropriate elasticity and supports said flat input board in such a way that entirety of said input detecting surface slightly goes downwardly upon application of pressure on said input detecting surface;

a movable electrode (6;10;16) moving in accordance with movement of said flat input plane;

a fixed electrode (8;18) arranged parallel to and adjacent to said movable electrode; and

a static capacitance detecting circuit (20-26) which detects changes in static capacitance between said movable electrode and said fixed electrode.

5. A position coordinate input device as claimed in claim 4, wherein said movable electrode and said flat input board are supported freely in their movement with respect to said fixed electrode so that a pressure can be detected even in the case of the pressure being extremely small.

6. A position coordinate input device as claimed in claim 4 or 5, wherein said flat input board is made of a transparent member and wherein a structure formed by said movable electrode, fixed electrode and elastic supporting member is arranged at least partial surrounding area of said flat input board.

7. A position coordinate input device as claimed in any one of claims 4 to 6, wherein said movable electrode has an appropriate elasticity and has a function of said elastic supporting member.

8. A position coordinate input device as claimed in any one of claims 4 to 7, wherein said movable electrode moves in a direction of approaching to said fixed electrode upon application of pressure onto said input detecting surface.

9. A position coordinate input device as claimed in any one of claims 4 to 7, wherein said movable electrode moves in a direction of departing away from said fixed electrode upon application of pressure onto said input detecting surface.

10. A position coordinate input device as claimed in any one of claims 4 to 9, wherein said device further comprises a dielectric substance (16) between said movable electrode and said fixed electrode.

11. A position coordinate input device as claimed in any one of claims 1 to 10, wherein said device further comprises a display device (4;14) for displaying the information outputted from said information processing device and said flat input board is made of a transparent member, said flat input board being arranged such that it is overlapped on a screen of said display device.

# Fig. 1

POSITION
COORDINATE
INPUT DEVICE
1

PRESSURE
DETECTING
DEVICE
2

INTERFACE
DEVICE
3

HIGHER-LEVEL
SYSTEM

# Fig. 2

DISPLAY
DEVICE
4

POSITION
COORDINATE
INPUT DEVICE
1

PRESSURE
DETECTING
DEVICE
2

INTERFACE
DEVICE
3

HIGHER-LEVEL
SYSTEM

## Fig. 3(a)

## Fig. 3(b)

## Fig. 4(a)

## Fig. 4(b)

## Fig. 5(a)

## Fig. 5(b)

## Fig. 6(a)

## Fig. 6(b)

# Fig. 7(a)

13

14

# Fig. 7(b)

17
18
8
9
13

15
16
14

# Fig. 7(c)

17
18
8
9
13
F

15
16
14

# Fig. 8(a)

# Fig. 8(b)

# Fig. 9

# Fig. 10

# Fig. 11

**Fig. 12**

# Fig. 13

# Fig. 14

# Fig. 15